**Europäisches Patentamt**

**European Patent Office**

**Office européen des brevets**

(11) Veröffentlichungsnummer: **0 021 161**
A1

# EUROPÄISCHE PATENTANMELDUNG

(21) Anmeldenummer: **80103111.3**

(22) Anmeldetag: **04.06.80**

(51) Int. Cl.³: **F 28 D 7/00**, F 16 L 41/08

(30) Priorität: **13.06.79 DE 2923913**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **HOECHST AKTIENGESELLSCHAFT**, Zentrale
**Patentabteilung Postfach 80 03 20,**
**D-6230 Frankfurt/Main 80 (DE)**

(72) Erfinder: **Chorala, Helmut, Billtalstrasse 64,**
**D-6231 Sulzbach (DE)**
Erfinder: **Disselbeck, Dieter, Am Rehsteig 3, D-6232 Bad**
**Soden am Taunus (DE)**
Erfinder: **Golly, Helmut, Dr., Rotlintallee 3,**
**D-6233 Kelkheim (Taunus) (DE)**

(54) **Anschlussvorrichtung für flache Hohlkörper.**

(57) Beschrieben wird eine Anschlußvorrichtung für gasförmige oder flüssige Medien in flache Hohlkörper. Ein Verteilerkranz, der einen größeren Durchmesser aufweist als die Bohrung durch den flachen Hohlkörper, wird zwischen die beiden Begrenzungsflächen des Hohlkörpers gesteckt. Durch das Innere dieses Verteilerkranzes (und durch den flachen Hohlkörper) wird sodann ein Anschlußstutzen eingebracht, der an einer Seite eine Druckplatte aufweist, die auf einer Seite einer Begrenzungsfläche des flachen Hohlkörpers aufliegt; der Anschlußstutzen ist in Höhe des Verteilerkranzes durchbohrt. Auf der anderen Seite des flachen Hohlkörpers trägt der Anschlußstutzen eine Gegendruckplatte. Druckplatte und Gegendruckplatte pressen über ein Gewinde die Begrenzungsflächen des flachen Hohlkörpers flüssigkeits- und gasdicht an den Verteilerkranz.

0021161

HOECHST AKTIENGESELLSCHAFT    HOE 79/F 143    Dr.v.F/wö

__Anschlußvorrichtung für flache Hohlkörper__

Die Erfindung betrifft eine Anschlußvorrichtung für die Zu- und/oder Ableitung gasförmiger und/oder flüssiger Medien in flache Hohlkörper.

In der DE-OS 27 14 901 wird ein Wärmeaustauscherelement beschrieben, das aus einer beidseitig beschichteten Doppelgewebebahn besteht, deren Ober- und Untergewebe auf Abstand gehalten werden, und das mit Zu- und Ableitungen für gasförmige und flüssige Medien versehen ist.

Derartige flache Hohlkörper weisen keine voneinander abgetrennten einzelnen Kanäle auf, sondern erlauben einen freien Durchfluß der gasförmigen und flüssigen Medien in allen Richtungen des flachen Hohlkörpers.

Bei dem bekannten Wärmeaustauscherelement erfolgt die Zu- und Ableitung der Medien in der Weise, daß je nach Bedarf auf Größe zugeschnittene, flachliegende Hohlkörper an zwei zweckmäßigerweise gegenüberliegenden Enden abgedichtet sind, während die beiden anderen Enden auf ihrer gesamten Länge mit einem Zu- bzw. Ableitungskanal versehen werden. Diese Kanäle können je nach Material anvulkanisiert, angeschweißt oder aber mechanisch befestigt werden.

Dabei hat sich nun gezeigt, daß durch die Länge der dabei entstehenden Verbindungsnähte Dichtigkeitsprobleme auftreten können. Weiterhin ist diese Art der Konfektionierung kaum geeignet, um an Ort und Stelle, beispielsweise bei der Anwendung des Wärmeaustauscherelementes als Fußbodenheizung, ein Element gewünschter Abmessungen herzustellen. Die Erfindung hat sich deshalb die Aufgabe gestellt eine Anschlußvorrichtung zur Verfügung zu stellen, die die erwähnten Nachteile vermeidet. Dies wurde bei einer Vorrichtung der

eingangs beschriebenen Art dadurch erreicht, daß der flache Hohlkörper (1) eine durchgehende Bohrung (2) aufweist, durch welche ein Verteilerkranz (3) mit größerem Außendurchmesser als dem der Bohrung (2) zwischen die beiden Begrenzungsflächen (4) und (5) des Hohlkörpers (1) eingebracht worden ist,

und daß sowohl durch Bohrung (2) als auch durch das innere des Verteilerkranzes (3) ein Anschlußstutzen (6) eingebracht worden ist, der an einer Seite eine Druckplatte (7) aufweist, die auf der einen Begrenzungsfläche (4) aufliegt, und der in Höhe des Verteilerkranzes (3) durchbohrt ist, und daß auf der anderen Begrenzungsfläche (5) der Anschlußstutzen (6) durch eine Gegendruckplatte (8) ragt, die zusammen mit Druckplatte (7) mit Hilfe eines auf dem Anschlußstutzen (6) befindlichen Gewindes (9) und einer Mutter (10) die Bohrung (2) im Hohlkörper (1) dicht abschließt.

Nach einer bevorzugten Ausführungsform wird die Druckplatte (7) ebenfalls durch eine Schraubverbindung auf dem Anschlußstutzen (6) an die Begrenzungsfläche (4) angedrückt.

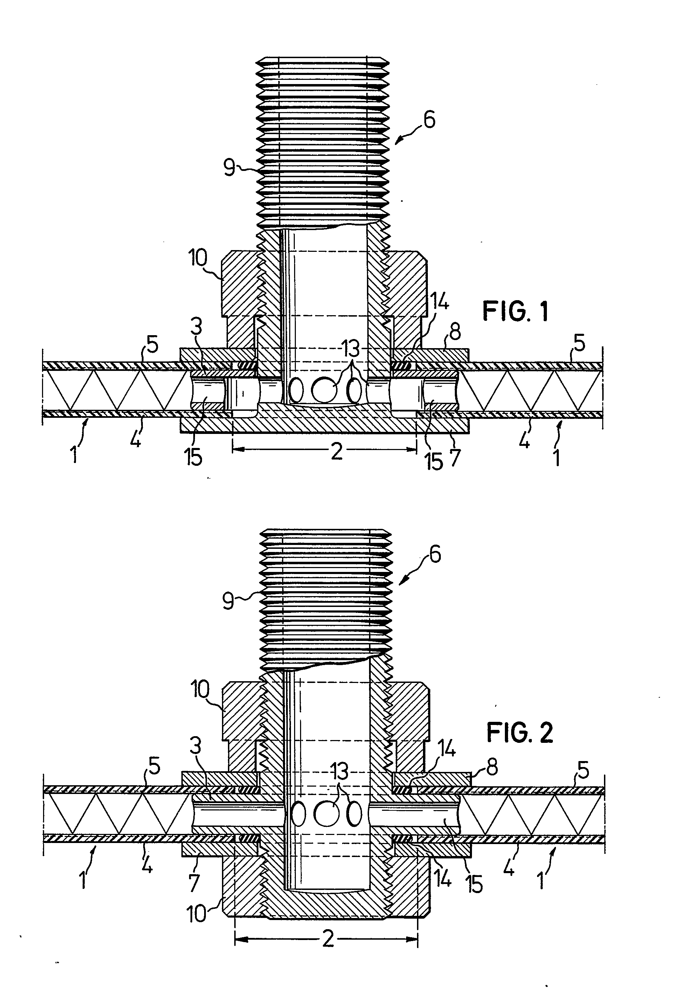

Nach einer weiteren vorzugsweisen Ausführungsform der erfindungsgemäßen Vorrichtung weist der Anschlußstutzen (6) zwischen Druckplatte (7) und Gegendruckplatte (8) Längsschlitze (11) auf, über deren Länge mehrere flache Hohlkörper (1) mit den dazugehörigen Verteilerkränzen (3) und Zwischenringen (12) angebracht sind. Im folgenden soll die Erfindung anhand der Figuren 1 bis 3 näher erläutert werden. Figuren 1 bis 3 zeigen Schnitte durch die erfindungsgemäße Vorrichtung. Darin bedeuten:

(1)   flacher Hohlkörper

(2)   Bohrung

(3)   Verteilerkranz

(4)   Begrenzungsfläche

(5)   Begrenzungsfläche

(6)   Anschlußstutzen

0021161

(7)  Druckplatte

(8)  Gegendruckplatte

(9)  Gewinde

(10)  Mutter

(11)  Längsschlitze

(12)  Zwischenring

(13)  Anschlußstutzenbohrung

(14)  Dichtring

(15)  Verteilerkranzbohrungen

In Figur 1 ist der flache Hohlkörper (1) gezeigt, der in diesem Fall aus einem beidseitig beschichteten Doppelgewebe mit Abstandshalterfäden besteht, und der die Bohrung (2) aufweist. Zwischen die beiden Begrenzungsflächen (4) und (5) ist durch die Bohrung (2) hindurch ein Verteilerkranz (3) geschoben worden, dessen Außendurchmesser größer ist als der Druchmesser der Bohrung (2) durch den flachen Hohlkörper (1). Durch die lichte Weite des Verteilerkranzes (3) wird Anschlußstutzen (6) geschoben, an dessen einem Ende die Druckplatte (7) in diesem Falle fest angebracht ist. Druckplatte (7) kommt fest an die Begrenzungsfläche (4) zu liegen. Über den Anschlußstutzen (6) hinweg ist sodann ein Dichtring (14) bis auf den Verteilerkranz (3) geschoben worden. Danach ist die Gegendruckplatte (8) bis an die Begrenzungsfläche (5) über den Anschlußstutzen (6) gebracht worden. Sie wird mit Hilfe von Gewinde (9) und Mutter (10) an die Begrenzungsfläche (5) gepreßt, wobei sich der Dichtring (14) wasser- bzw. gasdicht an den Anschlußstutzen (6) preßt und somit einen Durchtritt des flüssigen oder gasförmigen Mediums zwischen den Metallteilen verhindert. Auf der Seite der Begrenzungsfläche (4) und der Druckplatte (7) ist bei dieser Ausführungsform kein Dichtring erforderlich, da hier die Druckplatte (7) fest auf dem Anschlußstutzen (6) sitzt und nicht über ein Gewinde angebracht ist.

Zu- bzw. Ableitung des flüssigen oder gasförmigen Mediums erfolgt durch das innere des Anschlußstutzens (6), sodann durch die Anschlußstutzenbohrungen (13) und den Verteilerkranz (3), der wie sein Name sagt ebenfalls Bohrungen aufweist, nämlich die Verteilerkranzbohrungen (15).

Ein Aufwölben des flachen Hohlkörpers durch den Überdruck
des zuströmenden Mediums in der Nähe der Anschlußvorrichtung wird bei dieser Konstruktion vollständig vermieden, da
die Begrenzungsflächen des flachen Hohlkörpers im Bereich
der Anschlußvorrichtung in ihrer Lage fixiert sind.

Die erfindungsgemäße Anschlußvorrichtung kann auf der Baustelle in einfacher Weise in den flachen Hohlkörper eingebracht werden, nachdem an beliebiger Stelle des flachen
Hohlkörpers ein Loch durchgestanzt worden ist.

Figur 2 zeigt eine andere Ausführungsform der erfindungsgemäßen Anschlußvorrichtung. Diese Ausführungsform unterscheidet sich dadurch von der Vorrichtung nach Figur 1, daß
Druckplatte (7) nicht am Anschlußstutzen (6) angeschweißt
ist oder ein einziges Stück mit dem Anschlußstutzen (6)
bildet, sondern daß Druckplatte (7) ebenfalls auf ein
Gewinde (9) auf der Außenseite des Anschlußstutzens (6)
gebracht worden und mit Hilfe von einer Mutter (10) an die
Begrenzungsfläche (4) gepreßt wird. Dabei ist dann ein
weiterer Dichtring (14) auch zwischen Druckplatte (7) und
Verteilerkranz (3) erforderlich, weil hier zwei metallische
Flächen gegeneinander abgedichtet werden müssen. Dagegen
sind bei dieser Ausführungsform der Verteilerkranz (3) und
der Anschlußstutzen (6) aus einem Stück gearbeitet. Dadurch sind in diesem Falle Anschlußstutzenbohrungen (13)
und Verteilerkranzbohrungen (15) identisch.

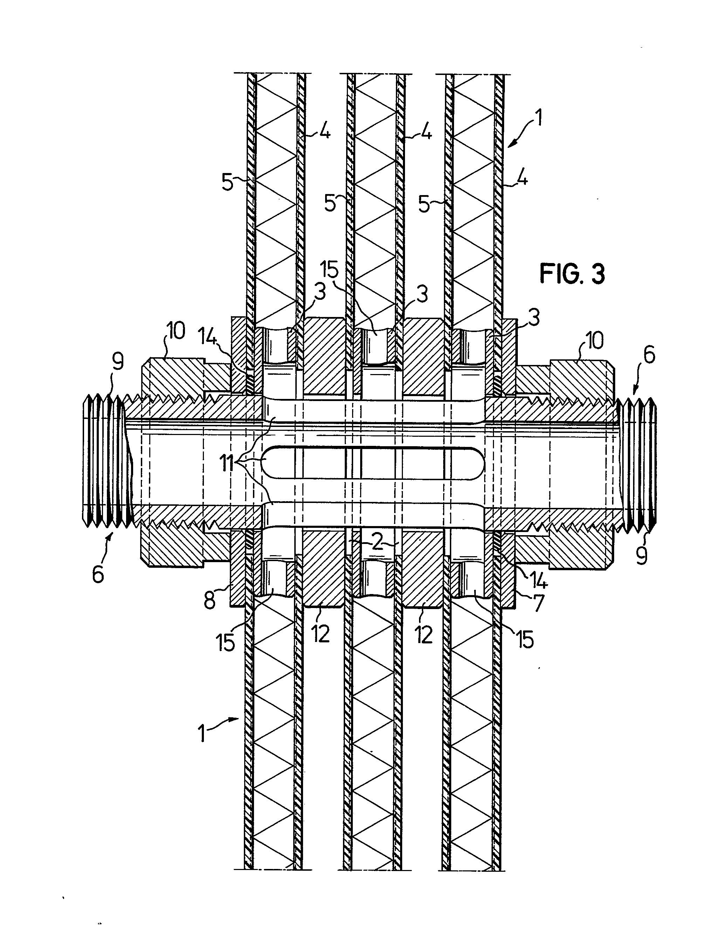

In Figur 3 ist eine erfindungsgemäße Vorrichtung gezeigt,
die es gestattet, eine beliebige Anzahl von flachen Hohlkörpern (1) über denselben Anschlußstuzen (6) gemeinsam zu
versorgen. Jeder dieser flachen Hohlkörper (1) weist eine
Bohrung (2) auf. Am einen Ende des Anschlußstutzens (6) ist
die Mutter (10) auf das Gewinde (9) aufgeschraubt und die
Druckplatte (7) über den Anschlußstutzen (6) geschoben

0021161

worden. Danach ist Dichtring (14) eingelegt worden. Anschließend ist der erste flache Hohlkörper (1), in dem sich
bereits der Verteilerkranz (3) befindet, so weit über den
Anschlußstutzen (6) gebracht worden, daß die Verteilerkranzbohrungen (15) des Verteilerkranzes (3) in den Bereich
des Längsschlitzes (11) zu liegen kommen. Nach Einlegen
eines Zwischenringes (12) folgen in derselben Art und Weise
noch zwei weitere flache Hohlkörper (1). Dichtring (14) und
Gegendruckplatte (8) werden wieder mit Hilfe von Mutter
(10) und Gewinde (9) in Richtung Druckplatte (7) gepreßt
und sorgen für Dichtheit.
Die Vorrichtung nach Figur 3 wird mit Vorteil immer dann
verwendet werden, wenn mehrere flache Hohlkörper gemeinsam
angeschlossen werden sollen, und wenn die flachen Hohlkörper
(1) nicht waagerecht beispielsweise auf dem Fußboden liegen
sollen, sondern senkrecht hängend benutzt werden sollen wie
z.B. in Kühltürmen. Anschlußstutzen (6) kann dann nämlich
gleichzeitig zum Aufhängen der gesamten Vorrichtung benutzt
werden.

Dichtringe (14) sind bei den erfindungsgemäßen Vorrichtungen überall dort erforderlich, wo metallische Flächen
gegeneinander abzudichten sind. Nicht erforderlich dagegen
sind sie an denjenigen Stellen, an denen Begrenzungsflächen
(4) und (5) auf metallische Flächen zu liegen kommen, da
die Begrenzungsflächen (4) und (5) an ihren Außenseiten
durch die Kunststoffbeschichtung die Wirkung der Dichtringe
selbst übernehmen können. Wenn die flachen Hohlkörper
Begrenzungsflächen haben, die nicht aus selbstdichtenden
Kunststoffen bestehen, müssen selbstverständlich auch hier
Dichtungsringe eingebracht werden.

Patentansprüche:

1. Anschlußvorrichtung für die Zu- und/oder Ableitung gasförmiger und/oder flüssiger Medien in flache Hohlkörper, dadurch gekennzeichnet, daß der flache Hohlkörper (1) eine durchgehend Bohrung (2) aufweist, durch welche ein Verteilerkranz (3) mit größerem Außendurchmesser als dem der Bohrung (1) zwischen die beiden Begrenzungsflächen (4) und (5) des Hohlkörpers (1) eingebracht worden ist, und daß sowohl durch Bohrung (2) als auch durch das Innere des Verteilerkranzes (3) ein Anschlußstutzen (6) eingebracht worden ist, der an einer Seite eine Druckplatte (7) aufweist, die auf einer Begrenzungsfläche (4) aufliegt, und der in Höhe des Verteilerkranzes (3) durchbohrt ist, und daß auf der anderen Begrenzungsfläche (5) der Anschlußstutzen (6) durch eine Gegendruckplatte (8) ragt, die zusammen mit Druckplatte (7) mit Hilfe eines auf dem Anschlußstutzen (6) befindlichen Gewindes (9) und einer Mutter (10) die Bohrung (2) im Hohlkörper (1) dicht abschließt.

2. Anschlußvorrichtung nach Anspruch 1, dadurch gekennzeichnet, daß die Druckplatte (7) ebenfalls durch eine Schraubverbindung auf dem Anschlußstutzen (6) an die Begrenzungsfläche (4) angedrückt wird.

3. Vorrichtung nach Anspruch 1 und/oder 2, dadurch gekennzeichnet, daß der Anschlußstutzen (6) zwischen Druckplatte (7) und Gegendruckplatte (8) Längsschlitze (11) aufweist, über deren Länge mehrere flache Hohlkörper (1) mit den dazugehörigen Verteilerkränzen (3) und Zwischenringen (12) angebracht sind.

0021161

FIG. 1

FIG. 2

FIG. 3

Europäisches
Patentamt

**EUROPÄISCHER RECHERCHENBERICHT**

0021161

EP 80103111.3

Nummer der Anmeldung

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 1 601 157 (AKTIEBOLAGET ROSENBLADS PATENTER) <br> + Fig. 1,4 + <br> -- | 1,2 |
| D | DE - A1 - 2 714 901 (HOECHST AG) <br> ---- | |

**KLASSIFIKATION DER ANMELDUNG (Int.Cl. 3)**

F 28 D 7/00
F 16 L 41/08

**RECHERCHIERTE SACHGEBIETE (Int. Cl. 3)**

F 28 D 7/00
F 24 H 9/00
F 16 L 41/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| VIENNA | 22-09-1980 | CZASTKA |

EPA form 1503.1  06.78